(19) Europäisches Patentamt / European Patent Office / Office européen des brevets

(11) **EP 1 464 032 B1**

(12) **FASCICULE DE BREVET EUROPEEN**

(45) Date de publication et mention de la délivrance du brevet:
**04.05.2016 Bulletin 2016/18**

(21) Numéro de dépôt: **02799801.2**

(22) Date de dépôt: **10.12.2002**

(51) Int Cl.:
***G06T 17/20*** *(2006.01)*

(86) Numéro de dépôt international:
**PCT/FR2002/004247**

(87) Numéro de publication internationale:
**WO 2003/050766 (19.06.2003 Gazette 2003/25)**

(54) **PROCEDE, DISPOSITIF ET PRODUIT PROGRAMME DE MODELISATION TRIDIMENSIONNELLE D UN VOLUME GEOLOGIQUE PAR PARAMETRAGE 3D DU DOMAINE GEOLOGIQUE**

VERFAHREN, EINRICHTUNG UND PROGRAMM ZUR DREIDIMENSIONALEN MODELLIERUNG EINES GEOLOGISCHEN VOLUMENS DURCH 3D-PARAMETRISIERUNG DES GEOLOGISCHEN BEREICHS

METHOD, DEVICE AND PROGRAMME FOR THREE-DIMENSIONAL MODELLING OF A GEOLOGICAL VOLUME BY 3D PARAMETERING OF THE GEOLOGICAL DOMAIN

(84) Etats contractants désignés:
**DE FR GB NL**

(30) Priorité: **10.12.2001 FR 0115945**

(43) Date de publication de la demande:
**06.10.2004 Bulletin 2004/41**

(73) Titulaire: **Paradigm France
54000 Nancy (FR)**

(72) Inventeurs:
• **DENY, Laurent
F-54230 Neuves-Maisons (FR)**
• **COGNOT, Richard
F-54520 Laxou (FR)**

(74) Mandataire: **Lebkiri, Alexandre et al
Cabinet Camus Lebkiri
25, Rue de Maubeuge
75009 Paris (FR)**

(56) Documents cités:
**WO-A-00/42576     US-A- 5 844 564**

• **JONES C B: "DATA STRUCTURES FOR THREE-DIMENSIONAL SPATIAL INFORMATION SYSTEMS IN GEOLOGY" INTERNATIONAL JOURNAL OF GEOGRAPHICAL INFORMATION SYSTEMS, LONDON, GB, vol. 3, no. 1, 1989, pages 15-31, XP002064461 ISSN: 0269-3798**
• **WANG S ET AL: "Shape simplification of free-form surface objects for multi-scale representation" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, 14 octobre 1996 (1996-10-14), pages 1623-1628, XP010206787 ISBN: 0-7803-3280-6**

**EP 1 464 032 B1**

**Description**

L'invention est relative à un procédé de modélisation tridimensionnelle d'une propriété f(x,y,z) définie dans un volume géologique, dans lequel on définit des cellules adaptées aux surfaces critiques du volume géologique à modéliser.

L'invention est également relative à un dispositif de modélisation tridimensionnelle d'un volume géologique pour la mise en oeuvre d'un procédé selon l'invention.

L'invention est enfin relative à un produit programme d'ordinateur permettant le fonctionnement d'un dispositif programmable de modélisation tridimensionnelle d'un volume géologique, pour la mise en oeuvre d'un procédé selon l'invention.

De manière connue, la modélisation d'un volume géologique est divisée en deux grandes étapes correspondant successivement à la construction d'un modèle structural puis à la construction d'un modèle de propriétés.

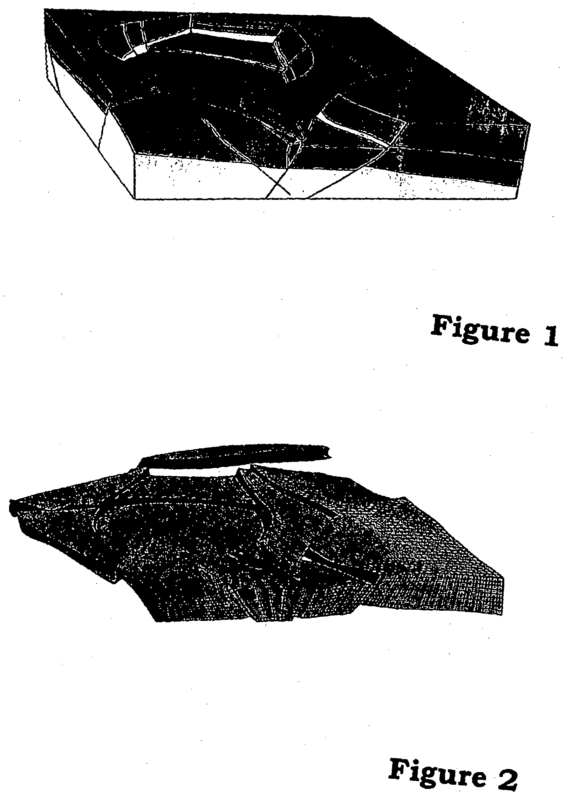

Comme représenté à la figure 1, la construction d'un modèle structural consiste en la décomposition de l'espace géologique en un ensemble de régions dites « homogènes » généralement bordées par trois types de surfaces : les « surfaces de failles » qui résultent de failles ou cassures survenues généralement après le dépôt des matériaux qui constituent les couches géologiques ; les « surfaces horizons » qui constituent la séparation entre couches successives et qui tirent leur nom du fait qu'elles étaient approximativement horizontales au moment du dépôt des matériaux constituant les couches ; et des surfaces limites introduites artificiellement pour limiter latéralement l'extension du domaine d'étude.

La construction d'un modèle structural relève de techniques connues et décrites, par exemple dans le document **«** Mallet, J.L., 1997 : Discrete Modeling for Natural Objects. Journal of Mathematical Geology, V. 29, No. 2, pp. 199-219 **»,** et ne nécessite pas de description plus détaillée.

Pour effectuer la modélisation tridimensionnelle d'un volume géologique, il est nécessaire de procéder à la construction d'un modèle de propriétés. Le sous sol est en effet caractérisable par un ensemble de propriétés comprenant notamment : la perméabilité, la porosité, la densité, la vitesse sismique ou la probabilité d'appartenir à un faciès géologique donné. Une propriété donnée est généralement connue en une pluralité de points d'observation du domaine géologique étudié et peut être définie dans chaque région homogène du domaine géologique d'étude, en utilisant des méthodes d'interpolation connues telles que, par exemple, la méthode du « krigeage » décrite dans la publication « Deutsch, C.V., and Journel, A.G., GSLIB: Geostatistical Software Library and User's Guide (second edition (1998)) 369 pages», éditée par Oxford University Press, New York.

Ces méthodes d'interpolation sont satisfaisantes lorsque l'interpolation est effectuée et enregistrée dans la mémoire d'un ordinateur en chaque noeud d'une grille régulière à mailles hexaédriques, et lorsque les noeuds de la grille régulière à mailles hexaédriques sont disposés parallèlement aux horizons.

Pour approcher ces deux conditions et obtenir des interpolations satisfaisantes, comme représenté à la figure 2, on déforme une grille régulière de façon à lui faire épouser la forme des horizons. Le défaut majeur d'une telle approche est que la grille régulière devient curvilinéaire ; ceci impose de stocker toutes les coordonnées de chaque noeud d'une telle grille curvilinéaire dans la mémoire d'un ordinateur et entraîne une consommation importante et indésirable de place mémoire de l'ordinateur.

Une consommation moins importante de place mémoire de l'ordinateur peut être obtenue dans le cas d'un procédé produisant des cellules hexaédriques contraintes à se projeter verticalement sous forme d'une grille régulière rectilinéaire dans le plan horizontal. Le document EP 0 254 325 B2 décrit ainsi un procédé de modélisation mathématique tridimensionnelle d'un volume géologique délimité, par construction de couches consistant en de multiples cellules. Le volume géométrique est délimité par des surfaces critiques, et a une structure stratigraphique donnée qui comprend des couches sédimentaires inclinées. Le procédé comprend les étapes de construction d'une grille séparée pour remplir l'espace compris entre chaque surface critique délimitant ledit volume afin de définir un espace modèle représentatif dudit volume, de construction de couches de cellules à l'intérieur dudit espace modèle, et d'affectation d'attributs à partir d'emplacements situés dans ledit volume réel dans des cellules qui correspondent, du point de vue de leur position à l'intérieur dudit volume modèle, aux positions des attributs dans le volume réel.

Les cellules construites sont situées dans des couches de cellules ayant des bords d'angle verticaux, dont la longueur varie de manière à se conformer à la géométrie des couches sédimentaires correspondantes situées dans le volume géologique. Les cellules dans chaque couche possèdent une épaisseur verticale constante prédéterminée entre des surfaces critiques dans n'importe quelle position, dans le cas où la cellule ne se termine pas au niveau d'une surface critique de limitation. Le volume réel est un volume géologique présentant une structure géologique stratigraphique constituée par les couches inclinées empilées de dépôts sédimentaires. Les grilles construites forment un volume modèle analogue au volume réel. Les couches de cellules sont placées, dans le volume modèle, selon des colonnes verticales de cellules et les couches de cellules sont inclinées et empilées de la même manière que les couches de sédiments dans le volume réel.

Les surfaces critiques sont des surfaces critiques d'initialisation ou des surfaces critiques de limitation comportant des couches sédimentaires inclinées intercalées entre les surfaces critiques dans la structure stratigraphique.

Les grilles construites sont des grilles d'initialisation ou de limitation servant à représenter la surface de limitation conformément à la structure stratigraphique donnée. Les cellules sont disposées selon des colonnes verticales d'une couche à la suivante, et les couches de cellules sont construites essentiellement parallèlement à la surface critique d'initialisation et possèdent une hauteur constante le long de leur couche respective.

Le but de la présente invention est de proposer un procédé de modélisation tridimensionnelle d'un volume géologique, en appliquant une méthode générale de modélisation d'une fonction représentant les variations d'une propriété géologique donnée à l'intérieur du domaine géologique étudié, tout en économisant l'espace mémoire d'ordinateur utilisée.

Un autre but de l'invention est de perfectionner les techniques de modélisation connues, par exemple d'après le document EP 0 254 325 B2, de manière à s'affranchir de l'alignement vertical des cellules et réduire l'encombrement mémoire de la grille ainsi construite.

Un autre but de l'invention est de faciliter la consultation des résultats de modélisation en utilisant des techniques de programmation structurées.

L'invention a pour objet un procédé de modélisation tridimensionnelle d'un volume géologique, dans lequel on définit des cellules adaptées aux surfaces critiques du volume géologique à modéliser, caractérisé par le fait que le procédé comporte les étapes suivantes :

a) définir un ensemble de macrocellules géologiques adaptées à la géométrie des couches géologiques du volume à modéliser ;

b) effectuer un paramétrage de l'espace géologique pour mettre en correspondance le domaine géologique étudié et un domaine paramétrique en associant à un point appartenant au domaine géologique une image située dans le domaine paramétrique ;

c) définir une subdivision virtuelle desdites macrocellules en microcellules, dont la géométrie est obtenue par subdivision de la géométrie de chaque macrocellule, de manière que les positions de chaque microcellule soient déduites par interpolation des positions des sommets de la macrocellule correspondante et de manière que des microcellules correspondent à des noeuds d'une grille régulière couvrant le domaine paramétrique; afin de modéliser une fonction représentative d'une propriété géologique sur la grille régulière du domaine paramétrique en réduisant le nombre de données à mémoriser.

Selon d'autres caractéristiques alternatives de l'invention :

- le domaine paramétrique est couvert par une grille régulière rectilinéaire dont les coordonnées des noeuds peuvent être retrouvées par calcul à partir des coordonnées $(u0,v0,w0)$ d'un noeud origine et des pas de la grille dans ses directions principales $(u,v,w)$.
- le paramétrage de l'espace géologique pour mettre en correspondance le domaine géologique étudié et un domaine paramétrique est tel qu'une coordonnée $(w)$ paramétrique de la grille régulière du domaine paramétrique reste constante sur l'image de chaque horizon et de telle façon que le gradient des images $(u, v, w)$ y reste non nul.
- les coordonnées paramétriques $(u,v,w)$ de tout point image d'un point $(x,y,z)$ situé à l'intérieur d'une macrocellule du domaine géologique sont calculées par interpolation des coordonnées paramétriques des sommets de la macrocellule supposées précalculés et stockés dans une mémoire d'ordinateur..
- les données de la fonction f représentative d'une propriété géologique observées en des points d'échantillonnage $(xi,yi,zi)$ du domaine géologique sont transportées en des points $(ui,vi,wi)$ du domaine paramétrique.
- la valeur $f(x,y,z)$ de la fonction modélisée est « transportée » entre un point $(x,y,z)$ géologique et un point image $(u,v,w)$ du domaine paramétrique.
- la valeur $f(x,y,z)$ de la fonction modélisée peut être interpolée aux noeuds de la grille régulière couvrant le domaine paramétrique ; ou la valeur $f(x,y,z)$ en un point $X(x,y,z)$ géologique de la fonction modélisée peut être obtenue par une lecture de la valeur de f associée au noeud $(i,j,k)$ le plus proche de l'image $(u,v,w)$ du point $X(x,y,z)$ géologique dans la grille régulière.

L'invention a également pour objet un dispositif de modélisation tridimensionnelle d'un volume géologique, dans lequel on définit des cellules adaptées aux surfaces critiques du volume géologique à modéliser, caractérisé par le fait que le dispositif comporte des moyens pour définir des macrocellules adaptées à la géométrie des couches géologiques du volume à modéliser, des moyens pour effectuer un paramétrage de l'espace géologique pour mettre en correspondance le domaine géologique étudié et un domaine paramétrique en associant à un point appartenant au domaine géologique un point image située dans le domaine paramétrique; et des moyens pour définir une subdivision virtuelle desdites macrocellules en microcellules, dont la géométrie est obtenue par subdivision de la géométrie de chaque macrocellule, de manière que les positions des sommets de chaque microcellule soient déduites par interpolation des positions des sommets de la macrocellule correspondante et de manière que des microcellules correspondent à des noeuds d'une grille régulière couvrant le domaine paramétrique.

L'invention a enfin pour objet un produit programme d'ordinateur, comportant des éléments de code de programme pour exécuter les étapes du procédé selon l'invention, lorsque ledit programme est exécuté par un ordinateur.

L'invention sera mieux comprise grâce à la description qui va suivre donnée à titre d'exemple non limitatif en référence aux dessins annexés dans lesquels :

- La figure 1 représente schématiquement, une vue en perspective d'un modèle structural de type connu composé de régions homogènes bordées par des surfaces de failles, des surfaces horizon et des surfaces artificielles limitant l'extension latérale d'un premier domaine géologique.
- La figure 2 représente schématiquement, une vue en perspective éclatée d'un exemple de grille régulière curvilinéaire de l'art antérieur couvrant le domaine géologique de la figure 1.
- La figure 3 représente schématiquement, une vue en perspective d'un exemple de découpage d'un autre domaine géologique G en cellules polyédriques selon l'invention dont les arêtes ne coupent pas les horizons et les failles.
- La figure 4 représente schématiquement, une mise en correspondance pour la modélisation d'un volume géologique à l'aide d'un procédé selon l'invention.
- La figure 5 représente schématiquement, une autre mise en correspondance pour la modélisation d'un volume géologique à l'aide d'un procédé selon l'invention.
- La figure 6 représente schématiquement, une mise en correspondance de microcellules pour la modélisation d'un volume géologique à l'aide d'un procédé selon l'invention.

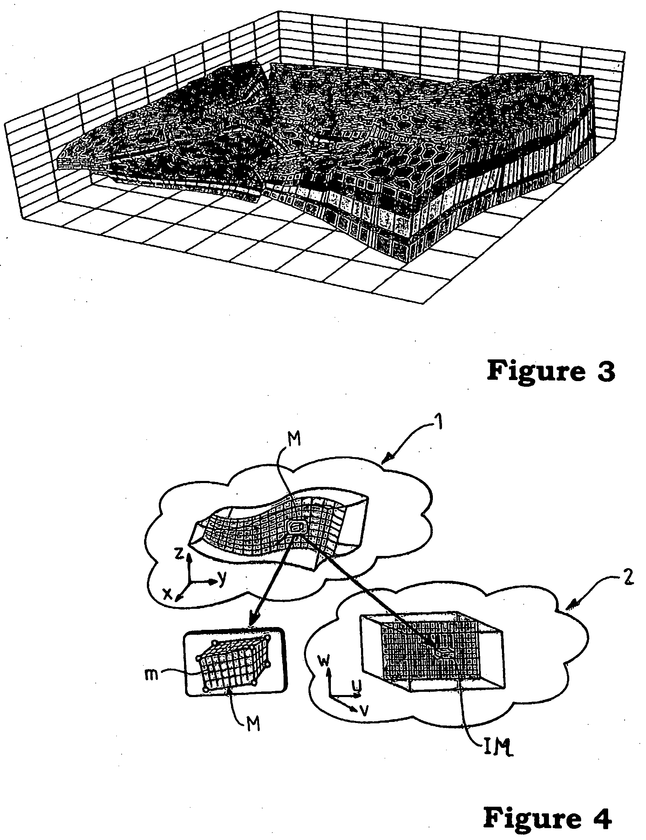

En référence aux figures 3 à 6, les éléments identiques ou fonctionnellement équivalents sont repérés par des chiffres de référence identiques.

Sur la figure 3, un autre domaine géologique G est découpé en cellules polyédriques selon l'invention dont les arêtes ne coupent pas les horizons et les failles.

Les cellules ainsi obtenues par n'importe quel procédé connu sont appelées dans la présente description « macrocellules géologiques M», qui réalisent une partition du domaine géologique G en « macrocellules géologiques M» adjacentes qui sont de petits éléments de volumes polyédriques.

Cette partition du domaine géologique G en « macrocellules géologiques M» adjacentes est, par exemple, destinée à permettre l'étude de la migration des fluides, le dépliage des couches géologiques ou encore le tracé des rayons sismiques. Ces macrocellules M polyédriques subdivisent le modèle structural de la figure 3, de façon que les arêtes des cellules polyédriques ne coupent jamais les horizons et les failles et que les faces des cellules polyédriques sont soit sensiblement parallèles aux horizons, soit sensiblement orthogonales aux horizons.

Le nombre de cellules nécessaires pour respecter ces contraintes ne dépend que de la complexité des horizons et de failles. En pratique, un tel découpage du domaine géologique ne nécessite généralement qu'un nombre réduit de macrocellules M indépendant de la complexité de la fonction f(x,y,z) à modéliser ; ce qui permet de stocker dans une mémoire d'ordinateur uniquement les coordonnées (x,y,z) de chaque sommet de ces macrocellules dans le domaine géologique G.

Si l'on considère une macrocellule M particulière désignée par C et si l'on désigne par {X1(C), X2(C),..., Xn(C)} les sommets de cette cellule C dans le domaine géologique G, il est possible de trouver pour tout point X situé a l'intérieur de cette cellule C, des coefficients {a1(X,C), a2(X,C), ..., an(X,C)} tels que :

$$X = a1(X,C) \cdot X1(C) + a2(X,C) \cdot X2(C) + \ldots + an(X,C) \cdot Xn(C)$$

On peut choisir, notamment, pour {a1(X,C), a2(X,C), ..., an(X,C)} un ensemble de coordonnées barycentriques de X par rapport à {X1(C), X2(C),..., Xn(C)}.

Si l'on désigne par (x,y,z) les coordonnées géologiques de X et par (xi(C), yi(C), zi(C)) les coordonnées du sommet Xi(C), l'équation ci-dessus est alors équivalente aux trois équations suivantes :

$$x = a1(X,C) \cdot x1(C) + a2(X,C) \cdot x2(C) + \ldots + an(X,C) \cdot xn(C)$$

$$y = a1(X,C) \cdot y1(C) + a2(X,C) \cdot y2(C) + \ldots + an(X,C) \cdot yn(C)$$

$$z = a1(X,C) \cdot z1(C) + a2(X,C) \cdot z2(C) + \ldots + an(X,C) \cdot zn(C)$$

La généralisation de ces équations permet une subdivision des « macrocellules géologiques M» , lesquelles sont redécoupées « virtuellement » en microcellules géologiques m.

Le procédé selon l'invention permet de découper « virtuellement » les macrocellules en microcellules en évitant de stocker explicitement les coordonnées (x,y,z) des sommets des microcellules, et obtenir une économie de mémoire considérable par rapport à l'art existant.

Le découpage des macrocellules en microcellules reste « virtuel », parce qu'il est inutile de calculer explicitement et de stocker les coordonnées (x,y,z) des sommets des microcellules.

Le procédé selon l'invention utilise en effet la construction d'une fonction mathématique vectorielle $X(u,v,w)=[x(u,v,w),y(u,v,w),z(u,v,w)]$ et de son inverse $U(x,y,z)=[u(x,y,z),v)x,y,z),w(x,y,z)]$ associant de façon biunivoque un point (u,v,w) d'un espace image paramétrique aux coordonnées (x,y,z) de chaque point de l'espace géologique.

La fonction U(x,y,z) est définie comme suit :

- Dans une phase d'initialisation, on choisit arbitrairement des coordonnées paramétriques (u,v,w) de chaque point image associé à chaque sommet de toutes les macrocellules M de manière que :

  o w est constant sur chaque sommet de toutes les macrocellules M situés sur un même horizon géologique ;
  o les surfaces géologiques réciproques des plans iso-valeur de u et des plans iso-valeur de v sont sensiblement orthogonales aux horizons géologiques;
  o les surfaces géologiques réciproques des plans iso-valeur de u et des plans iso-valeur de v sont sensiblement orthogonales entre elles.

- Puis on stocke dans une mémoire d'ordinateur les coordonnées paramétriques (u,v,w) images associées à chaque sommet de toutes les macrocellules M.

- Pour chaque point de coordonnées (x,y,z) situé dans une macrocellule C de l'espace géologique, on définit la valeur de U(x,y,z) comme obtenue par interpolation des coordonnées paramétriques (u,v,w) images associées aux sommets de C et préalablement stockées dans la mémoire d'ordinateur. On peut, par exemple, effectuer des interpolations trilinéaires à l'aide des équations barycentriques précitées ou d'autres interpolations trilinéaires ne faisant intervenir que les coordonnées (x,y,z) au premier degré.

L'espace paramétrique image est de préférence couvert par une grille rectilinéaire tridimensionnelle G dont les noeuds G[i,j,k] sont repérés par des indices entiers (i,j,k). Les coordonnées paramétriques u(i,j,k), v(i,j,k) et w(i,j,k) de chaque noeud G[i,j,k] sont des fonctions linéaires des indices (i,j,k).

Le point géologique X(x,y,z) de l'espace géologique, correspondant ou antécédent de chaque noeud G[i,j,k], est considéré comme centre d'une microcellule « virtuelle » géologique située au point X de coordonnées x(u(i,j,k), v(i,j,k) ,w(i,j,k)); y(u(i,j,k), v(i,j,k) ,w(i,j,k)) ; z(u(i,j,k), v(i,j,k) ,w(i,j,k).

Le nombre éventuellement important de ces microcellules « virtuelles » géologiques ne dépend pas de la taille des macrocellules géologiques et ne dépend que de l'espacement des noeuds de la grille G.

A chaque point géologique X(x,y,z) correspondant ou antécédent de chaque noeud G[i,j,k] pris pour centre d'une microcellule « virtuelle » de l'espace géologique peut être attachée une propriété physique affectée au centre de cette microcellule.

On construit une matrice tridimensionnelle T[i,j,k] contenant les valeurs de cette propriété indexé pour que la propriété au centre X d'une microcellule « virtuelle » géologique correspondant ou antécédent d'un noeud G[i,j,k]soit stocké en T[i,j,k].

Ainsi seules les valeurs de la propriété physique au centre X(x,y,z) de chaque microcellule sont stockées en mémoire sous forme d'une matrice tridimensionnelle T[i,j,k] ; tandis que les coordonnées du centre X(x,y,z) ou des sommets de ces microcellules ne sont jamais stockées et peuvent être localisées au moyen de la fonction de localisation $X(u,v,w)=[x(u,v,w),y(u,v,w),z(u,v,w)]$ appliquée à la grille G.

L'avantage du procédé de modélisation selon l'invention est ainsi d'éviter d'avoir à stocker les coordonnées (x,y,z) des sommets ou des centres des microcellules. Il en résulte un gain de place considérable par rapport aux procédés connus qui requièrent le stockage au moins de certaines coordonnées des microcellules.

Contrairement aux procédés connus où une seule valeur de la propriété modélisée est stockée par cellule, il n'est plus nécessaire d'adapter la taille de ces cellules à la plus ou moins grande variation locale de ladite propriété. L'invention permet ainsi de « découpler » la représentation de la propriété modélisée de celle de la géométrie des cellules et autorise la partition de l'espace géologique en un nombre restreint de macrocellules de taille généralement importante choisie en fonction de la complexité de la géométrie des horizons et des failles et indépendamment de la complexité de la propriété à modéliser.

Sur la figure 4, la figure 5 et la figure 6, un volume géologique désigné dans son ensemble par 1 est mis en correspondance avec un espace image désigné dans son ensemble par 2 à l'aide d'un procédé de modélisation mathématique selon l'invention.

Dans la technique connue, un des procédés habituels pour construire un modèle géologique consiste à décomposer les couches géologiques en un ensemble de cellules tridimensionnelles polyédriques adjacentes. Généralement, les cellules ont une forme hexaédrique et sont disposées de manière que deux cellules hexaédriques adjacentes soient accolées par une face commune. Les cellules hexaédriques sont disposées régulièrement de manière à présenter des faces supérieures et inférieures parallèles aux couches géologiques. La disposition régulière des cellules peut être interrompue par des discontinuités ou des surfaces critiques correspondant à des failles géologiques ou à des accidents géologiques. Dans le cas de failles ou d'accidents géologiques, les faces des cellules peuvent être disposées tangentiellement à la surface critique ; ou alternativement, les cellules peuvent être réparties selon un contour brisé encadrant et approximant la surface critique correspondant à la faille. La géométrie d'un réseau ainsi construit est définie entièrement par les coordonnées des sommets des cellules dans l'espace géologique. De préférence, dans la technique connue, les bords des cellules hexaédriques sont disposés de manière à orienter les arêtes reliant les faces supérieures et inférieures des cellules selon une direction approximativement perpendiculaire à la couche géologique à modéliser. Dans la technique connue, on peut construire des réseaux réguliers, c'est-à-dire des réseaux de cellules de formes voisines et alignés régulièrement ; on peut également construire des réseaux curvilignes tridimensionnels irréguliers, dans lesquels les cellules présentent une forme polyédrique, les cellules ne présentent pas nécessairement la même forme, les cellules ne sont pas nécessairement alignées régulièrement, tout en étant adjacentes. Les cellules sont de préférence choisies de taille suffisamment petite pour contenir un faciès géologique homogène présentant des propriétés physiques sensiblement constantes, par exemple une porosité et/ou une perméabilité constante. Pour obtenir une bonne représentation de la variation de propriétés physiques dans les couches géologiques, il s'avère ainsi nécessaire de construire un nombre très important de cellules, ce qui nécessite une quantité de mémoire de stockage très importante.

Pour pallier cet inconvénient, les documents US 4 821 164 et EP 0 254 325 B2 proposent de construire le réseau de cellules de manière à ce que leurs projections dans un plan horizontal constituent un réseau orthogonal régulier. Ceci implique que ces cellules hexaédriques aient leurs arêtes verticales alignées. Ce modèle simplifié permet ainsi de retrouver facilement les coordonnées en projection horizontale des cellules ainsi construites, la seule composante devant être mémorisée étant le composante verticale de chaque sommet. En effet, cette composante verticale est susceptible de varier en fonction de l'épaisseur de la couche géologique modélisée.

La présente invention se distingue de l'art antérieur en proposant une technique de modélisation à deux niveaux correspondant à deux étapes de modélisation successives.

Dans une première étape, on modélise la subsurface géométrique en définissant un ensemble de macrocellules hexaédriques ou polyédriques adapté à la géométrie des couches géologiques du volume 1 à modéliser. Dans une deuxième étape, on définit une subdivision des macrocellules M en microcellules hexaédriques ou polyédriques m, dont la géométrie est obtenue par subdivision de la géométrie de chaque macrocellule.

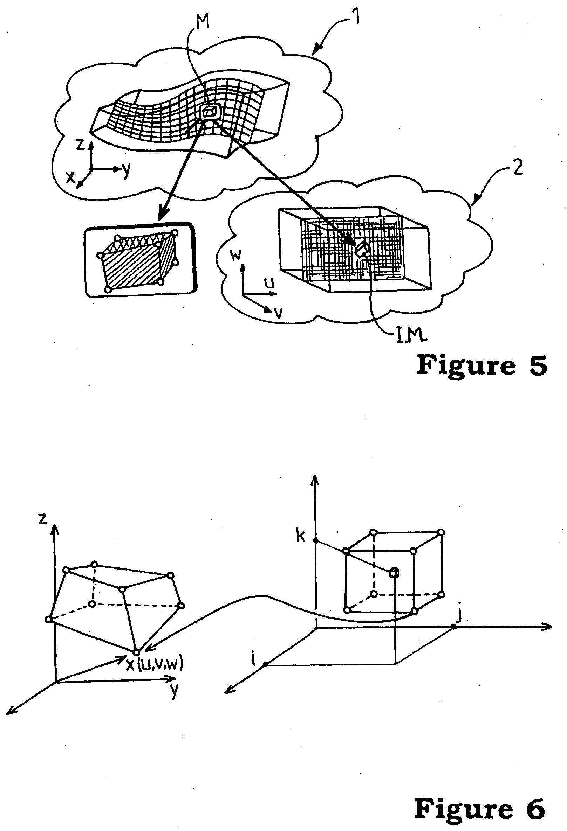

L'espace géologique 1 est ainsi divisé en macrocellules M disposées selon un réseau curvilinéaire, selon une technique connue en soi. Cette définition d'un ensemble de macrocellules M adjacentes permet de définir dans le cas de la figure 4 un triplet de coordonnées x, y, z définissant un sommet de chaque macrocellule M, et ainsi de définir les coordonnées des sommets du réseau curvilinéaire régulier de la figure 5. Chaque image IM de macrocellule M représentée par son triplet x, y, z associé, est stockée dans un espace image 2 correspondant à un enregistrement $U(x,y,z)=[u(x,y,z),v(x,y,z),w(x,y,z)]$ selon une matrice tridimensionnelle des données correspondant à la macrocellule.

Chaque sommet de l'image IM d'une macrocellule M est indexé dans la matrice tridimensionnelle de l'espace image 2 par un triplet de nombres entiers i, j, k.

La deuxième étape du procédé selon l'invention consiste à diviser « virtuellement » les macrocellules polyédriques (ou hexaédriques) M en microcellules hexaédriques m. Chaque macrocellule est ainsi divisée « virtuellement » régulièrement en un nombre entier de microcellules m, dont le nombre est choisi en fonction de la complexité des variations des propriétés physiques (par exemple : perméabilité, porosité) à modéliser.

En pratique, les microcellules m sont suffisamment petites pour que les propriétés physiques restent sensiblement constantes à l'intérieur de chaque microcellules m. Une itération par divisions successives permet de vérifier cette condition, ou d'augmenter « virtuellement » le nombre de microcellules m à l'intérieur d'une macrocellule M donnée si cette condition n'est pas respectée.

Ainsi, grâce à l'invention, la subsurface est modélisée en un réseau curviligne régulier tridimensionnel constitué de macrocellules M polyédriques ou hexaédriques adjacentes dans l'espace géologique 1. La taille de ces macrocellules M polyédriques ou hexaédriques est adaptée à la complexité de la géométrie des structures géologiques principales (horizons principaux et failles) et ne tient pas compte de la variation des propriétés physiques à l'intérieur de ces macrocellules M. Les propriétés physiques à l'intérieur des macrocellules M ne sont en effet pas nécessairement constantes et ne doivent pas être mémorisées dans ces macrocellules M. La seule fonction des macrocellules M est en effet de diviser l'espace géométrique du volume géologique à modéliser.

Les macrocellules M peuvent avoir une forme sensiblement polyédriques ou hexaédrique, mais leurs arêtes ne sont pas nécessairement parallèles à une direction prédéterminée, et en particulier les arêtes dans la direction verticale ne sont pas nécessairement parallèles à l'axe vertical des coordonnées, contrairement à l'enseignement du document US 4 821 164 ou du document EP 0 254 325 B2.

Etant donné que la seule fonction des macrocellules M est de partitionner les couches géologiques, le découplage entre la géométrie des macrocellules M et les variations des propriétés physiques du milieu à étudier permet de couvrir un espace géologique étendu avec un nombre restreint de macrocellules M adapté à la géométrie des couches géologiques du volume à modéliser, respectant les surfaces critiques telles que les failles géologiques et les limites supérieures et inférieures des couches géologiques considérées.

Comme cela est représenté dans la vue de détail agrandie de la figure 4, la figure 5 ou la figure 6, chaque macrocellule M est divisée « virtuellement » régulièrement en un nombre de microcellules m choisi en fonction de la complexité des variations des propriétés physiques (perméabilité, porosité) à modéliser.

L'indexation des microcellules m peut être effectué de manière analogue à l'indexation des macrocellules M dans l'espace image 2 par une indexation à l'aide d'un triplet i, j, k, de manière à établir une correspondance bijective entre chaque microcellule et un triplet i, j, k de la matrice tridimensionnelle de l'espace image 2 et de manière à respecter les propriétés de deux microcellules m adjacentes, à savoir indexer des microcellules m adjacentes par des triplets i, j, k adjacents et correspondant à leur position géologique respective.

Le découpage des macrocellules M en microcellules m permet ainsi d'enregistrer les propriétés physiques à l'intérieur de chaque microcellule en les associant à un triplet i, j, k de la matrice tridimensionnelle de l'espace image 2.

Cette association constitue une caractéristique particulièrement avantageuse du procédé de modélisation selon l'invention, en permettant de réduire l'espace mémoire total nécessaire à la mise en oeuvre de l'invention.

D'autres caractéristiques particulièrement avantageuses du procédé de modélisation de l'invention résultent de la modélisation « virtuelle » de la géométrie de chaque microcellule.

En effet, la modélisation de la géométrie de chaque microcellule m peut s'effectuer sans enregistrer les positions géométriques des sommets caractéristiques des microcellules m. Il suffit de déduire la position du sommet caractéristique ou du centre de chaque microcellule en se référant à la position des sommets caractéristiques de la macrocellule "mère" correspondante.

Cette caractéristique permet également une économie considérable d'espace mémoire, car la technique de modélisation géologique selon l'invention est plus compacte qu'une modélisation nécessitant l'enregistrement de tous les sommets caractéristiques des microcellules m par un facteur au moins égal au triple du nombre de microcellules m dans la macrocellule considérée.

A titre d'exemple, dans le cas particulier le plus simple, on peut calculer les coordonnées images curvilignes u, v, w du sommet caractéristique d'une microcellule associée avec un triplet i, j, k d'une matrice tridimensionnelle par les opérations suivantes:

$$u = i \pm \tfrac{1}{2} \; ;$$

$$v = j \pm \tfrac{1}{2} \; ;$$

$$w = k \pm \tfrac{1}{2}.$$

Dans ces formules, la matrice dimensionnelle est représentée comme un ensemble de points d'un espace tridimensionnel avec des coordonnées entières i, j, k ; les coordonnées curvilignes u, v, w du réseau régulier associé étant considérées comme des interpolations continues de l'emplacement des coordonnées de la matrice tridimensionnelle.

On peut observer que les sommets des macrocellules M sont également les sommets de certaines microcellules m et, en conséquence, que les sommets de ces certaines microcellules m donnent les images u, v, w dans l'espace paramétrique 2 des sommets des macrocellules M.

Les coordonnées des sommets caractéristiques des macrocellules M sont alors connues à la fois par leurs images dans l'espace paramétrique u, v, w et par leurs valeurs dans l'espace géologique x, y, z.

Sur la figure 6, pour chaque macrocellule M, il est possible de construire une fonction vectorielle continue par morceaux X (u, v, w) associant chaque point de l'espace paramétrique avec un point de l'espace géologique en interpolant les coordonnées des sommets de chaque macrocellule.

A cet effet, on peut utiliser une méthode d'interpolation décrite comme "hyperpatches", décrite dans l'ouvrage de MORTENSON publié en 1985 sous le titre "Geometric Modelling" aux Editions John Wiley, New-York ; ou par exemple une méthode d'approximation ou d'interpolation de Bézier, ou une méthode d'interpolation et d'approximation de Spline.

Il convient de noter que la fonction X (u, v, w) ainsi définie à l'aide de ces méthodes dépend uniquement des coordonnées (x,y,z) des sommets de la macrocellule dans l'espace géologique tridimensionnel 1. Par conséquent, X (u, v, w) est une fonction vectorielle qui peut être utilisée directement pour calculer l'emplacement des sommets des microcellules m dans l'espace géologique 1.

Sur la figure 5, on observe que le procédé selon l'invention de modélisation à deux niveaux décrit ci-dessus peut également être appliqué à des réseaux curvilignes tridimensionnels réguliers dans le cas le plus général où les microcellules m et les macrocellules M ne sont pas alignées ; les macrocellules M contiennent un nombre variable de microcellules m; et le réseau de macrocellules M est divisé en sous-ensembles de macrocellules M, chaque sous-ensemble étant associé avec une matrice tridimensionnelle distincte contenant les microcellules m de ce sous-ensemble.

La seule condition exigée pour la mise en oeuvre de l'invention est de pouvoir recalculer l'emplacement des sommets des microcellules m à partir de l'emplacement des sommets des macrocellules polyédriques ou hexaédriques M.

Dans ce but, comme représenté à la figure 4, la figure 5 et la figure 6, il suffit d'associer des coordonnées locales u, v, w dans l'espace paramétrique 2 à chaque sommet de macrocellules M, afin de pouvoir déduire ensuite par les méthodes d'interpolation citées, les emplacements des sommets des microcellules m.

Une généralisation de l'invention telle que représentée sur la figure 4 peut être encore étendue à une généralisation plus complète, faisant appel à des macrocellules M de forme polyédrique. Il est préférable dans ce cas que les microcellules m contenues dans des macrocellules M polyédriques présentent une forme hexaédrique, de manière à pouvoir encore utiliser dans ce cas la solution générale présentée ci-dessus pour les réseaux réguliers.

Le procédé le plus général selon l'invention appliqué à cette variante de réalisation non représentée peut utiliser des étapes telles que :

- enregistrer les coordonnées paramétriques u, v, w de chacun des sommets des macrocellules M dans l'espace image i, j, k des matrices tridimensionnelles utilisées pour enregistrer les propriétés des microcellules m hexaédriques ;
- construire une fonction vectorielle X (u, v, w) associant l'espace paramétrique à l'espace géologique de manière que la fonction X (u, v, w) fournisse une interpolation des sommets prédéterminés du réseau de macrocellules M ;
- utiliser la fonction vectorielle X (u, v, w) ainsi définie pour calculer d'emplacement du sommet ou du centre de chaque microcellule m dans l'espace géologique x, y, z.

Dans ce cas, il est également possible de regrouper les macrocellules M polyédriques d'une subdivision irrégulière de macrocellules M en sous-ensemble correspondant à des unités ou des ensembles géologiques, en associant ces sous-ensembles à des matrices tridimensionnelles distinctes de l'espace image.

L'invention décrite en référence à plusieurs modes de réalisation particuliers n'y est nullement limitée, mais couvre au contraire toute modification de forme et toute variante d'un procédé selon l'invention comportant définition d'un ensemble de macrocellules M, puis une subdivision desdites macrocellules M en microcellules m.

Pour la mise en oeuvre de l'invention, on utilise de préférence un dispositif programmable de modélisation tridimensionnelle, comportant des moyens pour définir des macrocellules polyédriques ou hexaédriques M adaptées à la géométrie des couches géologiques du volume à modéliser, ainsi que des moyens pour subdiviser lesdites macrocellules M en microcellules m, dont la géométrie est obtenue par subdivision de la géométrie de chaque macrocellule.

De préférence, le dispositif de modélisation tridimensionnelle selon l'invention est un dispositif programmable comportant une mémoire de stockage de valeurs numériques, et commandé par un produit programme d'ordinateur réalisé pour mettre en oeuvre une procédé de modélisation tridimensionnel selon l'invention.

Pour modéliser les variations rapides d'une propriété f(x,y,z) à l'aide d'une grille régulière très fine, on programme une modélisation en plusieurs étapes : paramétrage de l'espace géologique ; discrétisation du domaine géologique ; modélisation d'une propriété f(x,y,z).

Le paramétrage de l'espace géologique utilise une mise en correspondance entre le domaine géologique étudié G et un domaine paramétrique P en associant à tout point de coordonnées (x,y,z) appartenant au domaine géologique G une image située au point de coordonnées (u,v,w) dans le domaine paramétrique P :

$$u = u(x,y,z)$$

$$v = v(x,y,z)$$

EP 1 464 032 B1

$$w = w(x,y,z)$$

Les fonctions u(x,y,z), v(x,y,z), w(x,y,z) sont construites continues par morceaux et ne présentant des discontinuités qu'au travers des failles respectent les contraintes suivantes :

- L'image de chaque horizon dans le domaine paramétrique P est un plan horizontal : w(x,y,z) est choisi constant pour tout point de coordonnées (x,y,z) appartenant à un même horizon.
- L'image de toute paire de points distincts (x1,y1,z1) et (x2,y2,z2) situés dans le domaine géologique G consiste en une paire de points distincts (u1,v1,w1) et (u2,v2,w2) dans le domaine paramétrique P : le gradient des fonctions u(x,y,z), v(x,y,z) et w(x,y,z) est choisi pour ne jamais s'annuler dans le domaine géologique G étudié.

Les fonctions u(x,y,z), v(x,y,z) et w(x,y,z) sont données en un certain nombre de points d'échantillonnage (xi,yi,zi) situés dans l'espace géologique et sont interpolées numériquement à l'aide d'une méthode connue compatible avec les discontinuités à travers les failles, par exemple, une méthode de krigeage ou la méthode DSI du document « Mallet, J.L., (1992), Discrete Smooth Interpolation in Geometric Modeling, Computer-Aided Design, V. 24, No. 4, pp. 177-191 ».

Désignons par F(t) une fonction strictement monotone choisie arbitrairement ; par exemple, on peut choisir F(t)=(t0-t) ou t0 est une constante arbitraire donnée. Pour trouver des points d'échantillonnage (xi,yi,zi) appartenant au domaine géologique G pour lesquels les valeurs u(xi,yi,zi), v(xi,yi,zi) et w(xi,yi,zi) sont données, on fixe w(xi,yi,zi)=F(k) pour tout point (xi,yi,zi) appartenant a l'horizon Hk dans une liste {H1,H2,...,Hn} des horizons situés dans le domaine G et classés par ordre d'âges géologiques décroissants ; puis, en utilisant une méthode permettant de construire une paramétrisation u(x,y,z), v(x,y,z) pour chaque horizon H (par exemple, la méthode décrite dans « Lévy, B. and Mallet, J.L., (1998), Non-distorted texture mapping for sheared triangulated meshes, ACM-SIGGRAPH 1998 Conference Proceedings, Orlando, Florida, pp. 343-352 ») on calcule les valeurs u(xi,yi,zi) et v(xi,yi,zi) en tout point d'échantillonnage situé sur H.

La discrétisation du domaine géologique est effectuée de manière que les arêtes des cellules polyédriques ne coupent jamais les horizons et les failles et de manière que les faces des cellules polyédriques soient sensiblement parallèles ou sensiblement orthogonales aux horizons.

Pour chaque sommet du nombre réduit de cellules (macrocellules) obtenues après discrétisation du domaine géologique, on stocke dans une mémoire d'ordinateur les coordonnées (x,y,z) du sommet dans le domaine géologique G et les coordonnées (u,v,w) de l'image du sommet dans le domaine paramétrique P

La modélisation d'une propriété f(x,y,z) est facilitée par le fait que le domaine paramétrique est couvert par une grille régulière tridimensionnelle à mailles hexaédriques dont les arêtes sont rectilinéaires et orthogonales entre elles, et par le fait que les coordonnées (ui,vj,wk) de tout noeud (i,j,k) de cette grille sont calculées simplement par les équations suivantes:

$$ui = u0 + i \cdot Du$$

$$vj = v0 + j \cdot Dv$$

$$wi = w0 + k \cdot Dw,$$

où (u0,v0,w0) sont les coordonnées du noeud origine de la grille tandis que Du, Dv et Dw sont les pas de la grille dans les directions u,v et w.

Les valeurs (u0,v0,w0) et (Du, Dv,Dw) sont stockées dans une mémoire d'ordinateur pour mettre en oeuvre un procédé de modélisation de la fonction f(x,y,z).

Ce procédé de modélisation de la fonction f(x,y,z) comporte les étapes suivantes:

1. pour chaque point géologique X (xi,yi,zi) ou est observée la valeur f(xi,yi,zi) de la fonction à modéliser, on procède comme suit à un « transport » de cette valeur dans le domaine paramétrique au point de coordonnées (u(xi,yi,zi), v(xi,yi,zi), (xi,yi,zi)):

a. on détermine la macrocellule géologique C contenant le point X(xi,yi,zi)

9

b. on trouve les coordonnées paramétriques (ui,vi,wi) du point image du point géologique de X(xi,yi,zi) dans le domaine paramétrique
c. on installe la donnée fi=f(xi,yi,zi) au point (ui,vi,wi)

2. Dans l'espace paramétrique, en utilisant, par exemple, une méthode précitée de krigeage ou la méthode DSI précitée, on interpole la propriété f(i,j,k) en tout noeud (i,j,k) de la grille régulière et on stocke cette valeur dans une mémoire d'ordinateur.

3. pour chaque point (x,y,z) dans le domaine géologique G ou l'on souhaite connaître la valeur f(x,y,z) de la fonction f, on retrouve cette valeur f(x,y,z) comme suit :

a. on détermine la macrocellule C contenant le point (x,y,z)
b. on trouve le point (u,v,w) image de (x,y,z) dans le domaine paramétrique P
c. on cherche les indices (i,j,k) du noeud de la grille régulière le plus proche du point (u,v,w) dans l'espace paramétrique
d. on lit la valeur de f stockée dans la mémoire d'ordinateur associée au noeud (i,j,k) et on attribue cette valeur lue à f(x,y,z) ; ou, alternativement, on calcule f(x,y,z) comme interpolation locale des valeurs de f associées aux noeuds entourant le point (u,v,w)

Ainsi, grâce à l'invention, le stockage des coordonnées des noeuds de la grille régulière devient inutile : seules les valeurs (u0,v0,w0) et (Du, Dv,Dw) et les valeurs de la fonction f étudiée sont à stocker dans la mémoire d'ordinateur.

L'invention décrite en référence à plusieurs objets particuliers n'y est nullement limitée, mais couvre au contraire toute variante de réalisation dans le cadre et l'esprit de l'invention, l'essentiel étant d'effectuer une modélisation à deux niveaux : un premier niveau de modélisation géométrique ne devant pas tenir compte de la constance des paramètres physiques dans les macrocellules ; et un deuxième niveau de modélisation plus fine adaptée à une stabilité (valeur approximativement constante) des paramètres physiques à l'intérieur de chaque microcellule.

## Revendications

1. Procédé de modélisation tridimensionnelle d'un volume géologique, dans lequel on définit des cellules adaptées aux surfaces critiques du volume géologique à modéliser, **caractérisé par le fait que** le procédé comporte les étapes suivantes :

a) définir un ensemble de macrocellules polyédriques dans le domaine géologique adaptées à la géométrie des couches géologiques du volume à modéliser;
b) effectuer un paramétrage de l'espace géologique pour mettre en correspondance le domaine géologique étudié et un domaine paramétrique en associant à un point appartenant au domaine géologique un point image situé dans le domaine paramétrique ;
c) définir une subdivision virtuelle desdites macrocellules en microcellules, dont la géométrie est obtenue par subdivision de la géométrie de chaque macrocellule, de manière que les positions de chaque microcellule soient déduites par interpolation des positions des sommets de la macrocellule correspondante et de manière que des microcellules correspondent à des noeuds d'une grille régulière couvrant le domaine paramétrique ; afin de modéliser une fonction représentative d'une propriété géologique sur la grille régulière du domaine paramétrique en réduisant le nombre de données à mémoriser.

2. Procédé selon la revendication 1, **caractérisé par le fait que** le domaine paramétrique est couvert par une grille régulière rectilinéaire dont les coordonnées (u,v,w) des noeuds peuvent être retrouvées par calcul à partir des coordonnées (u0,v0,w0) d'un noeud origine et des pas de la grille dans ses directions principales.

3. Procédé selon la revendication 1 ou 2, **caractérisé par le fait que** les coordonnées paramétriques de chaque sommet de macrocellule sont déterminés dans une phase d'initialisation et stockées dans une mémoire de telle façon que la coordonnée paramétrique w reste constante sur chaque horizon et que le gradient des fonctions u=u(x,y,z), v=v(x,y,z) et w=w(x,y,z) reste non nul en tout point (x,y,z) du domaine géologique.

4. Procédé selon la revendication 1 ou la revendication 2, **caractérisé par le fait que** les coordonnées paramétriques (u,v,w) de l'image dans le domaine paramétrique de tout point de coordonnées (x,y,z) situé à l'intérieur d'une macrocellule de l'espace géologique sont calculées par interpolation des coordonnées paramétriques des sommets de la macrocellule supposées précalculées et stockées dans une mémoire.

**5.** Procédé selon l'une quelconque des revendications précédentes, **caractérisé par le fait que** les données de la fonction f représentative d'une propriété géologique observées en des points d'échantillonnage (xi,yi,zi) du domaine géologique sont transportées en des points (ui,vi,wi) du domaine paramétrique.

**6.** Procédé selon l'une quelconque des revendications précédentes, **caractérisé par le fait que** la valeur f(x,y,z) de la fonction modélisée est transportée entre un point (x,y,z) géologique et un point image (u,v,w) du domaine paramétrique.

**7.** Procédé selon la revendication 6, **caractérisé par le fait que** la valeur f(x,y,z) de la fonction modélisée est interpolée aux noeuds de la grille régulière couvrant le domaine paramétrique .

**8.** Procédé selon la revendication 6, **caractérisé par** le fait la valeur f(x,y,z) en un point X(x,y,z) géologique de la fonction modélisée est obtenue par une lecture de la valeur de f associée au noeud (i,j,k) le plus proche de l'image (u,v,w) du point X(x,y,z) géologique dans la grille régulière couvrant le domaine paramétrique.

**9.** Dispositif de modélisation tridimensionnelle d'un volume géologique, dans lequel on définit des cellules (macrocellules) adaptées aux surfaces critiques du volume géologique à modéliser, **caractérisé par le fait que** le dispositif comporte des moyens pour définir des macrocellules adaptées à la géométrie des couches géologiques du volume à modéliser, des moyens pour effectuer un paramétrage de l'espace géologique pour mettre en correspondance le domaine géologique étudié et un domaine paramétrique en associant à un point appartenant au domaine géologique une image située dans le domaine paramétrique ; et des moyens pour définir une subdivision virtuelle desdites macrocellules en microcellules, dont la géométrie est obtenue par subdivision de la géométrie de chaque macrocellule, de manière que les positions des microcellules soient déduites par interpolation des positions des sommets de la macrocellule correspondante et de manière que des microcellules correspondent à des noeuds d'une grille régulière du domaine paramétrique.

**10.** Produit programme d'ordinateur, comportant des éléments de code de programme pour exécuter les étapes du procédé selon l'une quelconque des revendications 1 à 8, lorsque ledit programme est exécuté par un ordinateur.

**Patentansprüche**

**1.** Dreidimensionales Modellgestaltungsverfahren eines geologischen Volumens, in dem Zellen definiert werden, die an die kritischen Oberflächen des als Modell zu gestaltenden geologischen Volumens angepasst sind, **gekennzeichnet durch** die Tatsache, dass das Verfahren die folgenden Stufen umfasst:

a) Definieren einer Struktur aus polyedrischen Makrozellen im geologischen Bereich, die an die Geometrie der geologischen Schichten des als Modell zu gestaltenden Volumens angepasst sind;
b) Durchführen einer Parametrierung des geologischen Raums, um den untersuchten geologischen Bereich und einen parametrischen Bereich in Entsprechung zu bringen, indem einem zum geologischen Bereich gehörender Punkt ein sich im parametrischen Bereich befindender Bildpunkt zugeordnet wird;
c) Definieren einer virtuellen Unterteilung der genannten Makrozellen in Mikrozellen, deren Geometrie per Unterteilung der Geometrie jeder Makrozelle derart erhalten wird, dass die Positionen jeder Mikrozelle per Interpolation der Positionen der Spitzen der entsprechenden Makrozelle abgeleitet werden und derart, dass die Mikrozellen Knoten eines regelmäßigen Gitters entsprechen, das den parametrischen Bereich abdeckt; um unter Reduzierung der Anzahl der abzuspeichernden Daten eine Funktion als Modell darzustellen, das für eine geologische Eigenschaft auf dem regelmäßigen Gitter des parametrischen Bereichs repräsentativ ist.

**2.** Verfahren gemäß Anspruch 1, **gekennzeichnet durch** die Tatsache, dass der parametrische Bereich **durch** ein regelmäßiges, geradliniges Gitter abgedeckt ist, dessen Koordinaten (u, v, w) der Knoten per Berechnung ausgehend von den Koordinaten (u0, v0, w0) eines ursprünglichen Knotens und der Schritte des Gitters in seinen Hauptrichtungen wiedergefunden werden können.

**3.** Verfahren gemäß Anspruch 1 oder 2, **gekennzeichnet durch** die Tatsache, dass die parametrischen Koordinaten jeder Makrozellenspitze in einer Initialisierungsphase bestimmt und in einem Speicher derart gespeichert werden, dass die parametrische Koordinate w auf jedem Horizont konstant bleibt und dass der Gradient der Funktionen u = u (x, y, z), v = v (x, y, z) und w = w(x, y, z) in jedem Punkt (x, y, z) des geologischen Bereichs ungleich Null bleibt.

**4.** Verfahren gemäß Anspruch 1 oder Anspruch 2, **gekennzeichnet durch** die Tatsache, dass die parametrischen Koordinaten (u, v, w) des Bildes in dem parametrischen Bereich jedes Koordinatenpunktes (x, y, z), der sich in einer Makrozelle des geologischen Raums befindet, per Interpolation der parametrischen Koordinaten der Spitzen der Makrozelle, die vermutlich vorberechnet und in einem Speicher gespeichert sind, berechnet werden.

**5.** Verfahren gemäß einem der voranstehenden Ansprüche, **gekennzeichnet durch** die Tatsache, dass die Daten der Funktion f, die eine geologische Eigenschaft darstellt, die in Beprobungspunkten (xi, yi, zi) des geologischen Bereichs beobachtet werden, in Punkte (ui, vi, wi) des parametrischen Bereichs übertragen werden.

**6.** Verfahren gemäß einem der voranstehenden Ansprüche, **gekennzeichnet durch** die Tatsache, dass der Wert f(x, y, z) der als Modell gestalteten Funktion zwischen einem geologischen Punkt (x, y, z) und einem Bildpunkt (u, v, w) des parametrischen Bereichs übertragen wird.

**7.** Verfahren gemäß Anspruch 6, **gekennzeichnet durch** die Tatsache, dass der Wert f(x, y, z) der als Modell gestalteten Funktion an den Knoten des regelmäßigen Gitters, das den parametrischen Bereich abdeckt, interpoliert ist.

**8.** Verfahren gemäß Anspruch 6, **gekennzeichnet durch** die Tatsache, dass der Wert f(x, y, z) in einem geologischen Punkt X(x, y, z) der als Modell gestalteten Funktion **durch** ein Lesen des Wertes von f, der dem Knoten (i, j, k) zugeordnet ist, der dem Bild (u, v, w) des geologischen Punktes X (x, a, z) in dem den parametrischen Bereich abdeckenden regelmäßigen Gitter am nächsten liegt, erhalten wird.

**9.** Dreidimensionale Modellgestaltungsvorrichtung eines geologischen Volumens, in dem Zellen (Makrozellen) definiert werden, die an die kritischen Oberflächen des als Modell zu gestaltenden geologischen Volumens angepasst sind, **gekennzeichnet durch** die Tatsache, dass die Vorrichtung Mittel umfasst, um an die Geometrie der geologischen Schichten des als Modell zu gestaltenden Volumens angepasste Makrozellen, Mittel **durch** Durchführung einer Parametrierung des geologischen Raums, um den untersuchten geologischen Bereich und einen parametrischen Bereich **durch** Zuordnen eines zum geologischen Bereich gehörenden Punktes zu einem sich im parametrischen Bereich befindenden Bildes miteinander in Entsprechung zu bringen, zu definieren; und Mittel, um eine virtuelle Unterteilung der genannten Makrozellen in Mikrozellen, deren Geometrie per Unterteilung der Geometrie jeder Makrozelle erhalten wird, derart, dass die Positionen der Mikrozellen per Interpolation der Positionen der Spitzen der entsprechenden Makrozelle abgeleitet werden und derart, dass die Mikrozellen Knoten eines regelmäßigen Gitters des parametrischen Bereichs entsprechen.

**10.** Computerprogrammprodukt, umfassend Programmcodeelemente zur Ausführung der Stufen des Verfahrens gemäß Anspruch 1 bis 8, wenn das genannte Programm von einem Computer ausgeführt wird.

**Claims**

**1.** A method for three-dimensionally modelling a geological volume, wherein cells adapted to the critical surfaces of the geological volume to be modelled are defined, **characterised in that** the method includes the following steps:

a) defining a set of polyhedral macrocells in the geological field adapted to the geometry of the geological layers of the volume to be modelled;
b) performing a parametering of the geological space to map the investigated geological field and a parametric field by associating with a point belonging to the geological field an image point located in the parametric field;
c) defining a virtual subdivision of said macrocells into microcells, the geometry of which is obtained by subdividing the geometry of each macrocell, so that the positions of each microcell are deduced by interpolating the positions of the vertices of the corresponding macrocell and so that microcells correspond to nodes of a regular grid covering the parametric field; in order to model a function representing a geological property on the regular grid of the parametric field by reducing the number of data to be stored.

**2.** The method according to claim 1, **characterised in that** the parametric field is covered by a rectilinear regular grid, the coordinates (u,v,w) of the nodes of which being able of being retrieved by computation from the coordinates (u0,v0,w0) of an original node and pitches of the grid along its main directions.

**3.** The method according to claim 1 or 2, **characterised in that** the parametric coordinates of each macrocell vertex are determined in an initialization phase and stored in a memory so that the parametric coordinate w remains constant on each horizon and the gradient of the functions u=u(x,y,z), v=v(x,y,z) and w=w(x,y,z) remains non-zero at any point (x,y,z) of the geological field.

4. The method according to claim 1 or claim 2, **characterised in that** the parametric coordinates (u,v,w) of the image in the parametric field of any point of coordinates (x,y,z) located inside a macrocell of the geological space are computed by interpolating the parametric coordinates of the vertices of the macrocell assumed to be computed and stored in a memory.

5. The method according to any of the preceding claims, **characterised in that** the data of function f representing a geological property observed at sampling points (xi,yi,zi) of the geological field are carried into points (ui,vi,wi) of the parametric field.

6. The method according to any of the preceding claims, **characterised in that** the value f(x,y,z) of the modelled function is carried between a geological point (x,y,z) and an image point (u,v,w) of the parametric field.

7. The method according to claim 6, **characterised in that** the value f(x,y,z) of the modelled function is interpolated at the nodes of the regular grid covering the parametric field.

8. The method according to claim 6, **characterised in that** the value f(x,y,z) at a geological point X(x,y,z) of the modelled function is obtained by reading the value of f associated with the node (i,j,k) closest to the image (u,v,w) of the geological point X(x,y,z) in the regular grid covering the parametric field.

9. A device for three-dimensionally modelling a geological volume, wherein cells (macrocells) adapted to the critical surfaces of the geological volume to be modelled are defined, **characterised in that** the device includes means for defining macrocells adapted to the geometry of the geological layers of the volume to be modelled, means for performing a parametering of the geological space to map the investigated geological field and a parametric field by associating with a point belonging to the geological field an image located in the parametric field; and means for defining a virtual subdivision of said macrocells into microcells, the geometry of which being obtained by subdividing the geometry of each macrocell, so that the positions of the microcells are deduced by interpolating the positions of the vertices of the corresponding macrocell and so that microcells correspond to nodes of a regular grid of the parametric field.

10. A computer program product, including program code elements for executing the steps of the method according to any of claims 1 to 8, when said program is executed by a computer.

Figure 1

Figure 2

**Figure 3**

**Figure 4**

**Figure 5**

**Figure 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0254325 B2

- US 4821164 A

**Littérature non-brevet citée dans la description**

- **MALLET, J.L.** Discrete Modeling for Natural Objects. *Journal of Mathematical Geology,* 1997, vol. 29 (2), 199-219
- **DEUTSCH, C.V. ; JOURNEL, A.G.** GSLIB: Geostatistical Software Library and User's Guide. 1998, 369
- Geometric Modelling. MORTENSON. John Wiley, 1985

- **MALLET, J.L.** Discrete Smooth Interpolation in Geometric Modeling. *Computer-Aided Design,* 1992, vol. 24 (4), 177-191
- **LÉVY, B. ; MALLET, J.L.** Non-distorted texture mapping for sheared triangulated meshes. *ACM-SIGGRAPH 1998 Conference Proceedings, Orlando, Florida,* 1998, 343-352